# EUROPEAN PATENT SPECIFICATION

(11) **EP 0 595 487 B1**
(45) Date of publication and mention of the grant of the patent: **19.05.1999**
(21) Application number: 93307865.1
(22) Date of filing: 04.10.1993
(51) Int. Cl.: F23C 11/02

(54) **Fluidized bed reactor including a stripper-cooler and method of operating same**
Wirbelschichtreaktor mit Strippergaskühler und Verfahren zum Betrieb desselben
Réacteur à lit fluidisé avec refroidisseur à gaz de strippage et procédé de sa mise en oeuvre

(30) Priority: 26.10.1992 US 966966
(43) Date of publication of application: 04.05.1994
(73) Proprietor: Foster Wheeler Energy Corporation, Clinton, New Jersey 08809-4000 (US)
(72) Inventor: Abdulally, Iqbal Fazaleabas, Randolph, New Jersey 07869 (US)
(74) Representative: Rackham, Anthony Charles

(56) References cited:
- EP-A- 0 393 931
- EP-A- 0 410 773
- GB-A- 2 032 598

## Description

This invention relates to a fluidized bed reactor and method for operating a fluidised bed and, more particularly, to a fluidized bed reactor including a stripper-cooler located adjacent the reactor for controlling the circulation and the temperature of the bed material.

Reactors, such as combustors, steam generators and the like, utilizing fluidized beds as the primary source of heat generation, are well known. In these arrangements, air is passed into the furnace section of the reactor and through a bed of particulate material contained therein which includes a mixture of a fossil fuel, such as coal, and an adsorbent, such as limestone, to adsorb the sulphur generated as a result of combustion of the coal. The air fluidizes the bed and promotes the combustion of the fuel. When the reactor is utilized as a steam generator, the heat produced by the combustion of the fuel is utilized to convert water to steam. Fluidized bed reactors provide an attractive combination of high heat release, high sulphur adsorption, low nitrogen oxides emissions and fuel flexibility.

The most typical fluidized bed combustion system is commonly referred to as a "bubbling" fluidized bed in which a dense bed of the particulate material is supported by an air distribution plate, to which the combustion supporting air is introduced through a plurality of perforations in the plate, causing the particulate material to expand and take on a suspended, or fluidized, state. The air velocity is typically two to three times that needed to develop a pressure drop which will support the bed weight (e.g., minimum fluidization velocity), causing the formation of bubbles that rise up through the bed and give the appearance of a boiling liquid.

In an effort to extend the improvements in combustion efficiency, pollutant emissions control, and operation turn-down afforded by the bubbling bed, a fluidized bed reactor was developed utilizing an expanded and elutriating fluidized bed commonly referred to as a "circulating" fluidized bed. In these arrangements, the size of the particulate material is decreased and/or the mean air velocity is increased when compared to the bubbling bed, so that the bed surface becomes more diffused and the entrainment of solids from the bed is increased. According to this process, in the lower portion of the furnace section, fluidized bed densities are attained which are well below those typical of bubbling fluidized beds, whereas the upper portion of the furnace section becomes loaded with entrained particulate material, or solids, to a much greater extent than in bubbling fluidized beds. This increased solids entrainment in the upper portion of the furnace section results in a high solids throughput which requires a high solids recycle rate. Reactors having high solids recycle rates require large and expensive separators to separate the entrained solids from the hot combustion gases before the gases pass through a heat recovery area to reduce erosion of the heat recovery surfaces in the heat recovery area. The separated solids are passed back to the fluidized bed.

U.S. Patent Nos. 4,809,623 and 4,809,625 disclose a fluidized bed reactor in which a dense, or bubbling, fluidized bed is maintained in the lower portion of the furnace section, while the bed is otherwise operated as a circulating fluidized bed. The design is such that advantages of both a bubbling bed and a circulating bed are obtained, not the least significant advantage being the ability to utilize particulate fuel material extending over a greater range of particle sizes.

In all of these designs, a homogenous mixture of fuel and adsorbent particulate material is formed with a portion of the fuel particles being unburned, a portion being partially burned, and a portion being completely burned. Similarly a portion of the adsorbent is unreacted, a portion is partially reacted and a portion is completely reacted. The particulate material must be discharged from the system efficiently to accommodate the introduction of fresh fuel and adsorbent. To this end, a portion of the particulate material is usually passed from the lower portion of the bed through a drain pipe to remove that portion from the reactor.

It has been found, however, that the particle size distribution in a fluidized bed, an important operating parameter, can be effectively controlled by recirculating part of this removed particulate material back to the furnace section. This is often accomplished by blowing air through the removed particulate material to strip away and entrain the finer portions of the particulate material and returning them to the furnace section.

For example, in U.S. Patent No. 4,829,912 a method of controlling the particle size distribution in a fluidized bed reactor is disclosed in which air entrains the finer portions of the particulate material removed through the drain pipe by stripping them with a stream of air and recirculating them back to the furnace section. In these types of arrangements, the heat of the nonrecirculated particulate material can be put to productive use, such as to preheat combustion supporting gas or for reheat or superheat duty.

A stripper-cooler located adjacent the furnace section of the reactor can accomplish both the recirculation of the finer portions of the removed particulate material and the removal of heat from the removed but nonrecirculated particulate material. In these types of arrangements, the stripper-cooler receives the particulate material from the furnace section and air is blown through a first section of the stripper-cooler to strip, or entrain, some of the finer portions of the particulate material which are returned to the furnace section. The remaining particulate material in the stripper-cooler is then usually passed to a cooler section where heat is removed from the particulate material by passing water/steam in a heat exchange relation to the particulate material or by blowing air through it before it is discharged from the system. When air is used to remove the heat from the nonrecirculated particulate material, this air is often returned to the furnace section as preheated, combustion-supporting air.

However, in some situations, such as when fuels that generate an excessive amount of relatively fine ash are used, or when a relatively large amount of relatively fine adsorbent has to be used with fuels having a relatively high sulphur content, the relatively fine particle material stripped in the stripper-cooler and returned to the furnace section increases the volume of the fines in the furnace section, or the upper furnace loading, to unacceptably high levels. Excessive upper furnace loading requires larger and more expensive stripper-coolers and separators and/or requires that the furnace be operated at a low stoichiometric condition, which is inefficient.

This upper furnace loading is made worse when the method used to cool the particulate material in the cooler section of the stripper-cooler is by blowing air through it. To achieve a high cooling rate and to prevent agglomeration of the particulate material in the stripper-cooler, the air velocity and flow rate through the cooler section must be relatively high. A high air velocity and flow rate, however, entrains greater amounts of particulate material resulting in an even greater volume of fines returned to the furnace section when this air is used as combustion supporting air, thereby further increasing the upper furnace loading.

Also, these types of stripper-coolers normally operate in a continuous mode, i.e., bed material from the reactor is continuously fed to the stripper-cooler. This results in a relatively short residence time of the material in the stripper-cooler and causes residual combustibles to accumulate in the bed ash which is ultimately drained from the system.

Another problem arises in these type stripper-coolers, especially ones that are partitioned, in connection with the processing of relatively large fuel materials, such as waste materials, tramp materials, etc. More particularly, the large materials tend to accumulate in the lower portion of the fluidized bed in the furnace section and thus, for the most part, are not circulated through the stripper-cooler. Also, those relatively large materials that are passed to the stripper-cooler often become jammed or clogged by the partition walls of the stripper cooler.

EP-393 931A describes an ash treatment system and process in which ash passes from a fluidized bed reactor to a separate vessel which is also fluidized and the fluidizing air entrains fines and returns them to the reactor whilst coarse fines are cooled and pass out of the vessel.

GB 2 032 598A shows a fluidized bed apparatus where a cooling vessel is situated adjacent the bed to receive and cool particulate material before it is discharged.

It is therefore an object of the present invention to provide a fluidized bed reactor and method in which particulate material is removed from the furnace section of the reactor and passed to a stripper-cooler.

According to the invention in one aspect there is provided a method of operating a fluidized bed, comprising supporting a bed of particulate material including fuel in a furnace, passing air through the particulate material in the furnace to fluidize it in a manner to entrain some of the material, discharging the entrained material and the entraining air from the furnace, transferring some of the remaining material from the furnace to a vessel, then terminating the step of transferring after a predetermined amount of the remaining material has been transferred to the vessel, initiating the passage of air through the vessel to fluidize material in the vessel and entrain some of the material in the said air, controlling the velocity of that latter air to control the degree of fluidization of the material in the vessel, the amount of material entrained, and the resultant height of the unentrained material in the vessel, returning material entrained in the air back to the furnace, maintaining the unentrained material in the vessel for a predetermined time, then draining at least a portion of that latter material from the vessel, resuming the step of transferring after a porting of the material has been drained from the vessel, and repeating the said steps of initiating, controlling, returning maintaining and draining after resuming.

According to the invention in another aspect there is provided a fluidized bed reactor comprising a furnace containing a bed of particulate material including fuel through which air is passed in a manner to fluidize the particulate material, a vessel extending to the side of the furnace, drain means for draining material from the vessel, a duct extending from the furnace to the vessel for connecting the furnace to the vessel, means for passing air in the vessel to fluidize material in the vessel, and means for connecting the vessel to the furnace for permitting the flow of the entrained material back to the furnace, characterised in that a plurality of nozzles extend through the side walls of the duct into the interior of the duct and are directed in a substantially horizontal direction towards the vessel for introducing air into the duct in a direction towards the vessel to transfer a quantity of the material from the furnace to the vessel, and a plate extends from the furnace, through the duct and into the vessel, the air for fluidizing the particulate material in the furnace and vessel passing through that plate, and in that a valve controls the draining of material from the vessel through the drain means.

With a fluidized bed reactor and method according to the present invention, particulate material can be selectively and periodically removed from the reactor through the stripper-cooler.

The residence time of the particulate material in the stripper-cooler can be increased when compared to arrangements in which the particulate material is continuously passed to the stripper-cooler.

Residual combustibles will be burned off from the bed ash in the stripper-cooler and relatively large materials are directed from the furnace section of the reactor to the stripper-cooler for discharge from the stripper-cooler.

In a preferred embodiment of the present invention, a sloped directional grid extending through the furnace section and the stripper-cooler supports the fluidized bed material and helps to direct the material to the stripper-cooler.

The invention will now be described, by way of example, with reference to the accompanying drawings, in which:
FIG. 1 is a sectional view of a fluidized bed reactor of the present invention;
FIG. 2 is a cross-sectional view taken along the line 2-2 of FIG. 1; and
FIG. 3 is a cross-sectional view taken along the line 3-3 of FIG. 2.

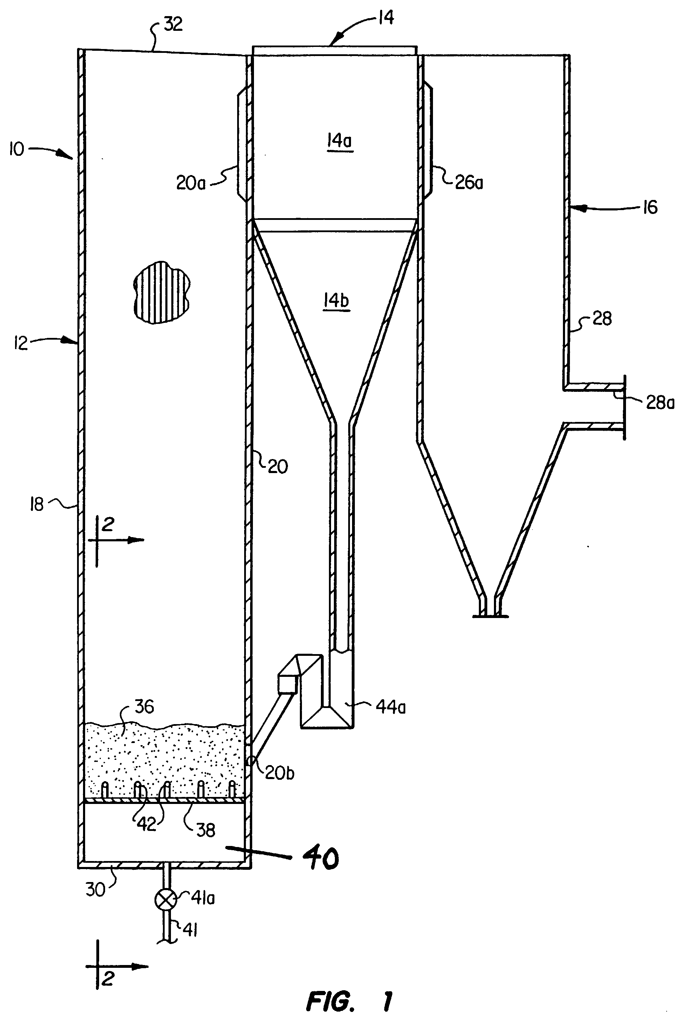

FIG. 1 depicts the fluidized bed reactor of the present invention which is shown in general by the reference numeral 10. The reactor 10 includes a furnace section 12, a separating section 14 and a heat recovery section 16, all shown in cross-section with their internal components removed for the convenience of presentation.

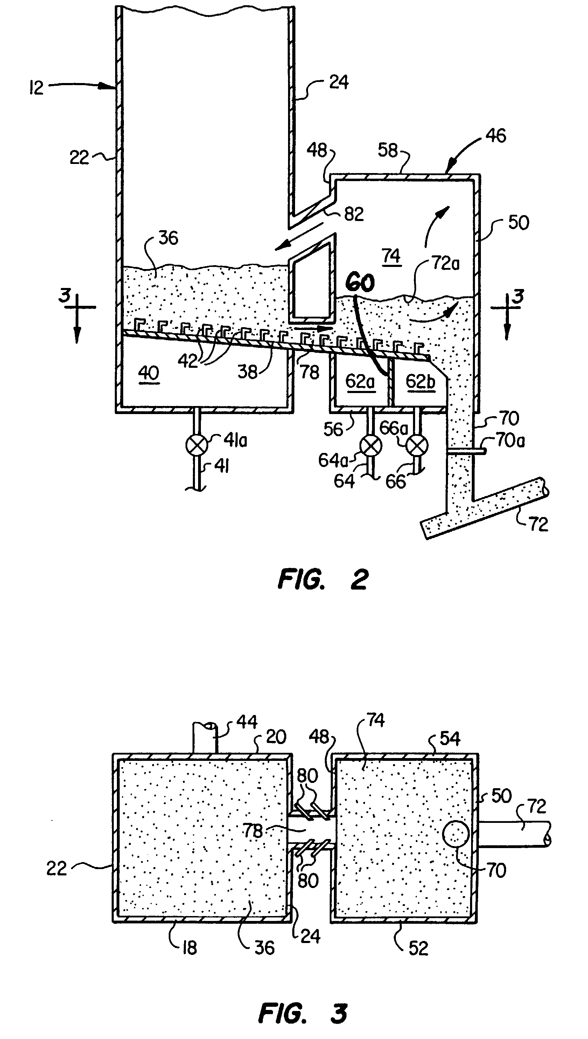

Referring to FIGS. 1 and 2, the furnace section 12 is defined by a front wall 18, a rear wall 20 and two sidewalls 22 and 24. Two walls 26 and 28 (FIG. 1) are provided in a spaced parallel relation to the wall 20 with the separating section 14 being defined by the walls 20 and 26, and the heat recovery section 16 being defined by the walls 26 and 28. A floor 30 is provided in the furnace section 12 and a roof 32 extends over the furnace section 12, the separating section 14 and the heat recovery section 16. Although not shown in the drawings, it is understood that the separating section 14 and the heat recovery section 16 are provided with sidewalls, which can be extensions of the sidewalls 22 and 24.

Openings 20a and 26a are provided in the upper portions of the walls 20 and 26, respectively, for permitting combustion flue gases produced in the furnace section 12 to pass from the furnace section into the separating section 14 and from the separating section to the heat recovery section 16, as will be explained.

It is understood that if the reactor 10 is used for the purpose of steam generation, the walls 18, 20, 22, 24, 26 and 28 would be formed by a plurality of heat exchange tubes formed in a parallel, gas tight manner to carry the fluid to be heated, such as water, such tubes shown schematically in FIG. 1 and referred to by reference numeral 34. It is also understood that a plurality of headers (not shown) would be disposed at both ends of each of the walls 18, 20, 22, 24, 26 and 28 which, along with additional tubes and associated flow circuitry, would function to route the water through the interior of the reactor and to and from a steam drum (not shown) in a conventional manner. These components are omitted in the drawings for the convenience of presentation.

A bed of particulate material, shown in general by the reference numeral 36, is disposed within the furnace section 12 and rests on a grid, or perforated plate, 38 extending in the lower portion of the furnace section. The plate 38 is sloped downwardly from the from wall 22 to the rear wall 24 and extends through an opening formed in the latter wall as will be described in detail later.

The bed 36 consists of discrete particles of fuel material, such as bituminous coal, which are introduced into the furnace section 12 by a feeder or the like in any known manner. It is understood that a sulphur absorbing material, such as limestone, can also be introduced into the furnace section 12 in a similar manner which material absorbs the sulfur generated by the burning coal. It is also understood that a bed light-off burner (not shown) is mounted through the wall 18 immediately above the plate 38 for initially lighting off a portion of the bed 36 during start-up.

A plenum 40 is defined between the plate 38 and the floor 30 and receives pressurized air from an external source via an air conduit 41 under control of a damper 41a. A plurality of nozzles 42 extend through perforations provided in the plate 38 and are adopted to discharge air from the plenum 40 into the bed 36. The nozzles 42 are directed to discharge the air in the direction from the front wall 22 towards the rear wall 24 for reasons to be described.

The air passing through the bed 36 fluidizes the bed to promote combustion of the fuel and combines with the products of combustion to form combustion flue gases which rise by convection in the furnace section 12. The flue gases entrain a portion of the relatively fine particulate material in the furnace section 12 before passing, via the opening 20a, into the separating section 14.

The separating section 14 includes a cyclone separator 14a which functions in a conventional manner to separate the entrained particulate material from the flue gases. The separated flue gases pass through the opening 26a in the wall 26 to the heat recovery section 16 and the separated particulate material, or separated solids, pass into a hopper portion 14b of the separating section 14. It is understood that one or more heat exchange units, such as a superheater, reheater or the like can be provided in the heat recovery section 16 for removing the heat from the separated flue gases as they pass downwardly in the section 16 before exiting through an outlet 28a extending through the wall 28.

A dipleg 44 extends from the hopper portion 14b of the separating section 14 to an opening 20b in the wall 20 of the furnace section 12 to pass the separated solids back to the bed 36. The dipleg 44 has a U-shaped portion forming a J-valve 44a for preventing the backflow of particulate material and/or gases directly from the furnace section 12 to the separating section 14, it being understood that the J-valve 44a could be replaced by an L-valve, seal pot, integral recycle heat exchanger or other device which could prevent the aforementioned backflow.

Referring to FIGS. 2 and 3, a stripper-cooler 46 is disposed adjacent the sidewall 24 of the furnace section 12. The stripper-cooler 46 is generally rectangular in shape and is defined by a front wall 48, a rear wall 50, two sidewalls 52 and 54 (FIG. 3), a floor 56 and a roof 58. It is understood that if the reactor 10 is used for the purpose of steam generation, the walls 48, 50, 52 and 54 would be formed by a plurality of heat exchange tubes in association with a plurality of headers and flow circuitry as previously described.

As discussed above, the sloped perforated plate 38 extends through the furnace section 12 and through an opening in the wall 24. As shown in Fig. 2, the plate 38 extends further through the wall 48 and into the stripper-cooler 46 in a spaced relationship with the floor 56. Additional nozzles 42 extend through openings in that portion of the plate 38 in the stripper-cooler 46.

A vertical partition 60 extends from the plate 38 to the floor 56 to define two plenums 62a and 62b there between. Two conduits 64 and 66 respectively communicate with the plenums 62a and 62b and receive gas, such as air, from an external source to control the air flow to, and the pressure in, the latter plenums. Two control dampers 64a and 66a are disposed in the conduits 64 and 66, respectively, to provide independent control of the flow to, and pressure in, the plenums 62a and 62b.

The nozzles 42 supported by the portion of the plate 38 located in the stripper-cooler 46 are directed to discharge air into the fluidized bed above the plate 38 and towards a drain pipe 70 extending through an opening in the floor 56 and located between the end of the plate 38 and the wall 50. A valve 70a is provided in the drain pipe 70 to control the flow of ash and particles through the pipe. The drain pipe 70 includes an angularly-extending branch pipe 72 for facilitating removal of bed ash and particles that accumulate in the stripper-cooler 46.

A sloping duct 78 connects the above-mentioned openings formed in the sidewall 24 of the furnace section 12 and the wall 48 of the stripper-cooler 46 to permit the particulate material in the bed 36 of the furnace section 12 to pass into the stripper-cooler 46. To this end, a plurality of air pipes 80 (FIG. 3) extend through the opposite side walls of the duct 78 for discharging air into the duct to promote the flow of the material through the duct and into the stripper-cooler 46. A sloped vent duct 82 connects additional corresponding openings formed in the sidewall 24 of the furnace section 12 and the adjacent wall 48 of the stripper-cooler 46 and is spaced above the duct 78. The vent duct 82 directs air, along with any entrained, fine particles from the stripper-cooler 46 to the furnace section 12 after the air passes through the particulate material in the stripper-cooler 46.

In operation, particulate fuel material and adsorbent are introduced into the furnace section 12 and accumulate on the plate 38 (FIG. 1). Air from an external source passes into the plenum 40 via the air conduit 41, through the plate 38, and the nozzles 42 and into the particulate material on the plate to fluidized the bed 36.

The light-off burner (not shown) or the like is fired to ignite the particulate fuel material in the bed 36. When the temperature of the material in the bed 36 reaches a predetermined level, additional particulate material is continuously discharged onto the upper portion of the bed 36. The air promotes the combustion of the fuel and the velocity of the air is controlled by the damper 41a to exceed the minimum fluidizing velocity of the bed 36 to form either a bubbling, circulating or hybrid fluidized bed.

As the fuel burns, and the adsorbent particles are reacted, in the furnace section 12, the continual influx of air through the nozzles 42 creates a homogenous fluidized bed of particulate material including unburned fuel, partially-burned fuel, and completely-burned fuel along with unreacted adsorbent, partially-reacted adsorbent and completely-reacted adsorbent. Due to the sloping of the plate 38 and the action of the directional air nozzles 42 in the furnace section towards the rear wall 24, the particulate material tends to gravitate towards the opening in the latter wall and pass through the opening and the duct 78 and into the stripper-cooler 46.

A mixture of air and the gaseous products of combustion pass upwardly through the bed 36 and entrain, or elutriate, the relatively fine particulate material in the bed. The resulting mixture of flue gases passes upwardly in the furnace section 12 by convection before it exits the furnace section through the opening 20a and passes into the separating section 14. The separator 14a functions in a conventional manner to separate the entrained particulate material from the flue gases. The separated particulate material, or separated solids, fall by gravity into the hopper 14b from which they are injected, via the dipleg 44, back into the bed 36. The relatively clean flue gases pass through the opening 26a, into the heat recovery section 16 and through the latter section before exiting the reactor via the outlet 28a.

The stripper-cooler 46 is initially void of particulate material and, when it is desired to fill it, the air pipes 80 are activated to discharge air into the duct 78 to promote the flow of particulate material from the bed 36 in the furnace section 12 to the stripper-cooler 46, via the duct 78. This, in combination with the directional discharge of the air from the nozzles 42 towards the stripper-cooler 46, ensure that relatively large materials in the furnace section 12 will be transferred to the stripper-cooler. The air to the transfer duct 76, via the air pipes 80, is shut off once the stripper-cooler 46 is filled with material from the furnace 12. Additional air, from the conduit 64, under the control of the damper 64a, is introduced into the plenum section 62a. The air passes upwardly through the plate 38 and through the nozzles 42 and fluidizes the particulate material flowing into the stripper-cooler 46. The damper 66a is controlled as desired to introduce air, via the conduit 66, into the plenum section 62b. This air passes upwardly through the plate 38 and the nozzles 42, to further fluidize the particulate material in the stripper-cooler 46. The velocity of the air introduced into the stripper-cooler 46, via the conduits 64 and 66 is carefully controlled by the dampers 64a and 66a respectively, to control the degree of flow of material into the stripper-cooler 46, the degree of fluidization of the particulate material, the resultant height of the particulate material and the amount of the relatively fine particulate material which is entrained by the air and thus stripped away from the relatively coarse particulate material. The air and entrained fine particulate material pass upwardly through the stripper-cooler 46 and, via the duct 82, back to the furnace section 12.

The air introduced into the stripper-cooler 46 via the ducts 64 and 66 in the foregoing manner removes heat from the particulate material contained therein and promotes the flow of the nonstripped, relatively coarse, particulate material towards the drain pipe 70. The velocity of the air and therefore the degree of flow of the material into the stripper-cooler 46 and the degree of fluidization and the resultant height of the material in the stripper-cooler are respectively controlled as needed by varying the position of the dampers 64a and 66a.

The particulate material is allowed to reside in the stripper-cooler 46 for a predetermined, relatively long, time before the drain valve 70a is opened to drain the material from the stripper-cooler 46.

It is thus seen that the device of the present invention provides several advantages. For example, recirculation of the particulate material in a fluidized bed furnace can be accomplished with a relatively small stripper-cooler since the recirculation rate is decreased by removing some of the particulate material from its furnace section, storing it in the stripper-cooler, and discharging it from the stripper-cooler, thus preventing it from recirculating back into the furnace section. In addition, the amount of particulate material recirculated back into the furnace section from the stripper-cooler can be reduced so that the loading in the upper furnace section of the reactor is not increased, thereby improving the stoichiometric conditions of the reactor as well as reducing the size and expense of the separator section needed to separate the entrained particulate material from the combustion flue gases.

Further, by being able to reduce the amount of entrained particulate material that is recirculated from the stripper-cooler into the furnace section, the air flow and velocity into the stripper-cooler can be increased to prevent agglomeration of the particulate material in the stripper-cooler as well as to increase the cooling efficiency of the stripper-cooler.

Still further, any relatively large material, such as waste material, tramp material, etc. is transferred to the stripper-cooler for ultimate removal from the reactor.

Finally, by operating in a batch cycle mode the solids in the stripper-cooler can be maintained at a higher temperature for a longer time compared to a continuous cycle. This, in turn, results in a longer residence time for burning any residual combustibles in the bed ash and the particulate material in the stripper-cooler.

## Claims

1. A method of operating a fluidized bed, comprising supporting a bed of particulate material including fuel in a furnace (12), passing air through the particulate material in the furnace to fluidize it in a manner to entrain some of the material, discharging the entrained material and the entraining air from the furnace (12), transferring some of the remaining material from the furnace (12) to a vessel (46), then terminating the step of transferring after a predetermined amount of the remaining material has been transferred to the vessel (46), initiating the passage of air through the vessel (46) to fluidize material in the vessel and entrain some of the material in the said air, controlling the velocity of that latter air to control the degree of fluidization of the material in the vessel, the amount of material entrained, and the resultant height of the unentrained material in the vessel, returning material entrained in the air (46) back to the furnace (12), maintaining the unentrained material in the vessel (46) for a predetermined time, then draining at least a portion of that latter material from the vessel (46), resuming the step of transferring after a portion of the material has been drained from the vessel (46), and repeating the said steps of initiating, controlling, returning maintaining and draining after resuming.

2. A method as claimed in Claim 1 comprising continuing during the remaining steps, the passing of air through the particulate material in the furnace.

3. A method as claimed in Claim 2 in which the passage of air through the vessel is initiated after the transfer of material to the vessel (46) is terminated.

4. A method as claimed in any preceding claim further comprising separating the discharged entrained material from the entraining air, cooling that separated material and passing that cooled, separated material back to the furnace (12).

5. A method as claimed in any preceding claim in which the transfer of some of the remaining material from the furnace (12) to vessel (46) is through a duct (78), and air is directed in a substantially horizontal direction through that duct (76) in a direction towards the vessel (46).

6. A fluidized bed reactor comprising a furnace (12) containing a bed of particulate material (36) including fuel through which air is passed in a manner to fluidize the particulate material (36), a vessel (46) extending to the side of the furnace (12), drain means (70) for draining material from the vessel (46), a duct (78) extending from the furnace (12) to the vessel (36) for connecting the furnace (36) to the vessel (46), means (62a,62b) for passing air in the vessel (46) to fluidize material in the vessel, and means (82) for connecting the vessel to the furnace for permitting the flow of entrained in the fluidizing air of said vessel (46) material back to the furnace (12), characterised in that a plurality of nozzles (80) extend through the side walls of the duct (78) into the interior of the duct (78) and are directed in a substantially horizontal direction towards the vessel (46) for introducing air into the duct (78) in a direction towards the vessel (46) to transfer a quantity of the material from the furnace (12) to the vessel (46), and a plate (38) extends from the furnace (12), through the duct (78) and into the vessel (46), the air for fluidizing the particulate material in the furnace (12) and vessel (46) passing through the plate (38), and in that a valve (70a) controls the draining of material from the vessel (46) through the drain means (70).

7. A reactor as claimed in Claim 6 in which the duct (78) is inclined downwardly form the furnace (12), to that vessel (46) to promote the transfer of the said quantity of material to the vessel (46).

8. A reactor as claimed in Claim 6 or Claim 7 further comprising means (64a, 66a) for controlling the velocity of the (46) air passed to the vessel (46) to control the degree of fluidization of material in the vessel (46), the amount of entrained material in the vessel (46), and the resultant height of the unentrained material in the vessel (46)

9. A reactor as claimed in any Claims 6 to 8 further comprising means for directing the air passed to the vessel (46) in a substantially horizontal direction across the material in the vessel (46) and towards the drain means (70).

10. A reactor as claimed in any of Claims 6 to 9 in which the air in the furnace (12) entrains a portion of the material in the furnace (12), and further comprising a separator (14) for separating that entrained material from the air, means for passing that separated material form the separator (14) to a heat exchanger, and means for passing the separated material from the heat exchanger back to the furnace (12).

## Patentansprüche

1. Verfahren zum Betreiben einer Wirbelschicht, umfassend die Aufnahme einer Schicht aus partikulärem Material mit Brennstoff in einem Ofen (12), Leiten von Luft durch das partikuläre Material in dem Ofen, um es auf eine solche Weise zu fluidisieren, daß ein Teil des Materials mitgerissen wird, Ablassen des mitgerissenen Materials und der mitreißenden Luft aus dem Ofen (12), Übertragen eines Teils des restlichen Materials von dem Ofen (12) in einen Behälter (46), dann Abbrechen des Übertragungsschrittes, wenn eine vorbestimmte Menge des restlichen Materials in den Behälter (46) übertragen wurde, Einleiten des Leitens von Luft durch den Behälter (46), um Material in dem Behälter zu fluidisieren und einen Teil des Materials in der genannten Luft mitzureißen, Regeln der Geschwindigkeit dieser letzteren Luft zum Regeln des Ausmaßes an Fluidisierung des Materials in dem Behälter, der Menge an mitgerissenem Material und der sich daraus ergebenden Höhe des nicht mitgerissenen Materials in dem Behälter, Zurückführen von in der Luft (46) mitgerissenen Materials in den Ofen (12), Halten des nicht mitgerissenen Materials in dem Behälter (46) für eine vorbestimmte Zeitdauer, und anschließendes Ablassen von wenigstens einem Teil dieses letzteren Materials aus dem Behälter (46), Wiederaufnahme des Übertragungsschrittes, wenn ein Teil des Materials aus dem Behälter (46) abgelassen wurde, und Wiederholen der genannten Schritte des Einleitens, Regelns, Zurückführens, Haltens und Ablassens nach der Wiederaufnahme.

2. Verfahren nach Anspruch 1, umfassend das Fortsetzen, während der verbleibenden Schritte, des Leitens von Luft durch das partikuläre Material in dem Ofen.

3. Verfahren nach Anspruch 2, bei dem das Leiten von Luft durch den Behälter nach Abbruch der Übertragung von Material zu dem Behälter (46) eingeleitet wird.

4. Verfahren nach einem der vorherigen Ansprüche, ferner umfassend das Abscheiden des abgelassenen mitgerissenen Materials von der mitreißenden Luft, das Kühlen dieses abgeschiedenen Materials und das Leiten dieses gekühlten, abgeschiedenen Materials zurück in den Ofen (12).

5. Verfahren nach einem der vorherigen Ansprüche, bei dem die Übertragung eines Teils des restlichen Materials aus dem Ofen (12) in den Behälter (46) durch eine Rohrleitung (78) erfolgt und Luft in einer im wesentlichen horizontalen Richtung durch diese Rohrleitung (76) in Richtung auf den Behälter (46) geleitet wird.

6. Wirbelschichtreaktor, umfassend einen Ofen (12), der eine Schicht aus partikulärem Material (36) einschließlich Brennstoff enthält, durch die Luft auf eine solche Weise geleitet wird, daß das partikuläre Material (36) fluidisiert wird, einen Behälter (46), der zur Seite des Ofens (12) verläuft, ein Ablaßmittel (70) zum Ablassen von Material aus dem Behälter (46), eine Rohrleitung (78), die von dem Ofen (12) in den Behälter (36) verläuft, um den Ofen (12) mit dem Behälter (46) zu verbinden, Mittel (62a, 62b) zum Leiten von Luft in den Behälter (46), um Material in dem Behälter zu fluidisieren, und ein Mittel (82) zum Verbinden des Behälters mit dem Ofen, um den Rückfluß von Material, das in der Fluidisierungsluft des genannten Behälters (46) mitgerissen wurde, in den Ofen (12) zuzulassen, dadurch gekennzeichnet, daß eine Mehrzahl von Düsen (80) durch die Seitenwände der Rohrleitung (78) in das Innere der Rohrleitung (78) verlaufen und in einer im wesentlichen horizontalen Richtung zum Behälter (46) gerichtet sind, um Luft in die Rohrleitung (78) zum Behälter (46) hin einzuleiten, um eine Menge des Materials aus dem Ofen (12) in den Behälter (46) zu übertragen, und eine Platte (38) von dem Ofen (12) durch die Rohrleitung (78) und in den Behälter (46) verläuft, wobei die Luft zum Fluidisieren des partikulären Materials in dem Ofen (12) und dem Behälter (46) durch diese Platte (38) strömt, und dadurch, daß ein Ventil (70a) das Ablassen von Material aus dem Behälter (46) durch das Ablaßmittel (70) steuert.

7. Reaktor nach Anspruch 6, bei dem die Rohrleitung (78) von dem Ofen (12) abwärts zu diesem Behälter (46) geneigt ist, um die Übertragung der genannten Menge von Material zu dem Behälter (46) zu fördern.

8. Reaktor nach Anspruch 6 oder Anspruch 7, ferner umfassend Mittel (64a, 66a) zum Regeln der Geschwindigkeit der (46) zu dem Behälter (46) geleiteten Luft, um das Ausmaß der Fluidisierung von Material in dem Behälter (46), die Menge an mitgerissenem Material in dem Behälter (46) und die sich daraus ergebende Höhe des nicht mitgerissenen Materials in dem Behälter (46) zu regeln.

9. Reaktor nach einem der Ansprüche 6 bis 8, ferner umfassend ein Mittel zum Richten der zu dem Behälter (46) geleiteten Luft in einer im wesentlichen horizontalen Richtung über das Material in dem Behälter (46) und zu dem Ablaßmittel (70) hin.

10. Reaktor nach einem der Ansprüche 6 bis 9, bei dem die Luft in dem Ofen (12) einen Teil des Materials in dem Ofen (12) mitreißt, und ferner umfassend einen Abscheider (14) zum Abscheiden dieses mitgerissenen Materials von der Luft, ein Mittel zum Leiten dieses abgeschiedenen Materials von dem Abscheider (14) zu einem Wärmetauscher, und ein Mittel zum Leiten des abgeschiedenen Materials vom Wärmetauscher zurück zum Ofen (12).

## Revendications

1. Méthode d'exploitation d'un lit fluidisé, comprenant le support d'un lit de matériau particulaire comprenant du combustible dans un four (12), le passage d'air à travers le matériau particulaire contenu dans le four pour le fluidiser de manière à entraîner une partie du matériau, le déchargement du matériau entraîné et de l'air d'entraînement hors du four (12), le transfert d'une partie du matériau restant du four (12) à un récipient (46), puis la terminaison de l'étape de transfert après qu'une quantité prédéterminée du matériau restant a été transférée au récipient (46), l'amorçage du passage de l'air à travers le récipient (46) pour fluidiser le matériau dans le récipient et entraîner une partie du matériau dans ledit air, la commande de la vitesse de ce dernier air pour déterminer le degré de fluidisation du matériau dans le récipient, la quantité de matériau entraîné, et la hauteur résultante du matériau non entraîné dans le récipient, le retour au four (12) du matériau entraîné dans l'air (46), le maintien du matériau non entraîné dans le récipient (46) pendant une durée prédéterminée, puis l'évacuation d'au moins une partie de ce dernier matériau du récipient (46), la reprise de l'étape de transfert après qu'une partie du matériau a été évacuée du récipient (46), et la répétition desdites étapes d'amorçage, de commande, de retour, de maintien et d'évacuation après la reprise.

2. Méthode selon la Revendication 1, comprenant la continuation, pendant les étapes restantes, du passage de l'air à travers le matériau particulaire contenu dans le four.

3. Méthode selon la Revendication 2 dans laquelle le passage de l'air à travers le récipient est amorcé après que le transfert de matériau au récipient (46) est terminé.

4. Méthode selon l'une quelconque des revendications précédentes comprenant en outre la séparation du matériau entraîné déchargé de l'air d'entraînement, le refroidissement de ce matériau séparé et le retour au four (12) de ce matériau refroidi séparé.

5. Méthode selon l'une quelconque des revendications précédentes dans laquelle le transfert d'une partie du matériau restant du four (12) au récipient (46) se fait par un conduit (78), et l'air est dirigé dans une direction substantiellement horizontale dans ce conduit (76) en direction du récipient (46).

6. Réacteur à lit fluidisé comprenant un four (12) contenant un lit de matériau particulaire (36) comprenant du combustible à travers lequel de l'air passe de manière à fluidiser le matériau particulaire (36), un récipient (46) disposé sur le côté du four (12), un moyen d'évacuation (70) pour évacuer le matériau du récipient (46), un conduit (78) s'étendant du four (12) au récipient (46) pour relier le four (36) au récipient (46), des moyens (62a, 62b) pour faire passer l'air dans le récipient (46) pour fluidiser le matériau dans le récipient, et un moyen (82) pour relier le récipient au four pour permettre la circulation du matériau entraîné dans l'air de fluidisation dudit récipient (46) de retour au four (12), caractérisé en ce que plusieurs injecteurs (80) traversent les parois latérales du conduit (78) pour entrer à l'intérieur du conduit (78) et sont dirigés dans une direction substantiellement horizontale vers le récipient (46) pour introduire de l'air dans le conduit (78) dans la direction du récipient (46) pour transférer une quantité du matériau du four (12) au récipient (46), et une plaque (38) s'étend du four (12), à travers le conduit (78) et dans le récipient (46), l'air de fluidisation du matériau particulaire dans le four (12) et le récipient (46) passant à travers cette plaque (38), et en ce qu'une vanne (70a) commande l'évacuation du matériau du récipient (46) à travers le moyen d'évacuation (70).

7. Réacteur selon la Revendication 6 dans lequel le conduit (78) est incliné vers le bas à partir du four (12) vers ce récipient (46) pour favoriser le transfert de ladite quantité de matériau au récipient (46).

8. Réacteur selon la Revendication 6 ou la Revendication 7 comprenant en outre des moyens (64a, 66a) pour commander la vitesse de l'air passé au récipient (46) pour déterminer le degré de fluidisation du matériau dans le récipient (46), la quantité de matériau entraîné dans le récipient (46), et la hauteur résultante du matériau non entraîné dans le récipient (46).

9. Réacteur selon l'une quelconque des Revendications 6 à 8, comprenant en outre des moyens pour diriger l'air passé au récipient (46) dans une direction substantiellement horizontale à travers le matériau contenu dans le récipient (46) et vers le moyen d'évacuation (70).

10. Réacteur selon l'une quelconque des Revendications 6 à 9 dans lequel l'air contenu dans le four (12) entraîne une partie du matériau contenu dans le four (12) et comprenant en outre un séparateur (14) pour séparer ce matériau entraîné de l'air, un moyen pour faire passer ce matériau séparé du séparateur (14) à un échangeur de chaleur, et un moyen pour faire repasser au four (12) le matériau séparé de l'échangeur de chaleur.
